(19) Europäisches Patentamt

European Patent Office

Office européen des brevets

(11) Veröffentlichungsnummer: **0 481 356 B1**

(12) **EUROPÄISCHE PATENTSCHRIFT**

(45) Veröffentlichungstag der Patentschrift: **27.09.95**

(21) Anmeldenummer: **91117267.4**

(22) Anmeldetag: **10.10.91**

(51) Int. Cl.⁶: **G01B 9/02**, G01D 5/38, G01D 5/34

(54) **Polarisationsoptische Anordnung.**

(30) Priorität: **18.10.90 DE 4033013**

(43) Veröffentlichungstag der Anmeldung:
**22.04.92 Patentblatt 92/17**

(45) Bekanntmachung des Hinweises auf die
Patenterteilung:
**27.09.95 Patentblatt 95/39**

(84) Benannte Vertragsstaaten:
**AT CH DE FR GB IT LI**

(56) Entgegenhaltungen:
**GB-A- 2 185 314**

**PATENT ABSTRACTS OF JAPAN vol. 13, no.
587 (P-983) 25. Dezember 1989 ; & JP-A-12 50
803**

**PATENT ABSTRACTS OF JAPAN vol. 12, no.
413 (P-780) 2. November 1988 ; & JP-A-63 151
802**

(73) Patentinhaber: **Dr. Johannes Heidenhain
GmbH
Postfach 12 60
D-83292 Traunreut (DE)**

(72) Erfinder: **Michel, Dieter
Langauenstrasse 12
W-8220 Traunstein (DE)**
Erfinder: **Spanner, Erwin
Forstmeier Strasse 12
W-8220 Traunstein (DE)**

## Beschreibung

Die Erfindung bezieht sich auf eine polarisationsoptische Anordnung nach dem Oberbegriff des Anspruches 1.

Polarisationsoptische Anordnungen sind bei Längen- oder Winkelmeßeinrichtungen bekannt. In der DE 39 42 385 A1 ist zum Stand der Technik eine Längenmeßeinrichtung beschrieben, bei der mittels Beugungsgitter, Polarisatoren, Strahlteiler, Viertelwellenlängenplatte, Analysatoren und optischen Detektoren Meßsignale erzeugt werden, die zu einem Referenzsignal, welches keine Interferenzstreifen aufweist, eine Phasenverschiebung von 45° und untereinander eine Phasenverschiebung von 90° aufweisen.

Die Druckschrift JP-A-1 250 803 zeigt ein Interferometer, bei dem mit Hilfe von Beugungsgittern gebeugte Teilstrahlenbündel erzeugt werden. Diesen Teilstrahlenbündeln sind Polarisationselemente zugeordnet, nach deren Durchtritt die Teilstrahlenbündel interferieren und von Fotodetektoren in elektrische Signale umgewandelt werden. Die Polarisationswinkel der Polarisationselemente sind dort auf 90° zueinander abgestimmt.

Die Druckschrift JP-A-63 151 802 zeigt ebenfalls ein Interferometer, das mit einem linear oder zirkular polarisierten Strahlenbündel arbeitet. Mit Hilfe von polarisierenden Strahlteilern werden Teilstrahlenbündel erzeugt deren Polarisationsebenen im rechten Winkel zueinander stehen. Mit Hilfe eines Referenzstrahlenganges wird die Relativverschiebung eines Tripelprismas gemessen, indem die Interferenzstreifen durch einen Array-Sensor detektiert werden.

In der GB-A-2 185 314 ist bei einer Meßeinrichtung offenbart, daß die Polarisationsachsen der Polarisationsplatten sich rechtwinklig schneiden und so angeordnet sind, daß sie mit Bezug zu den jeweiligen Polarisationsachsen der $\lambda$/4-Plättchen einen 45°-Winkel bilden. Damit ist lediglich die Zuordnung der $\lambda$/4-Plättchen zu den Polarisationsachsen bestimmt.

Keineswegs ist dadurch die Zuordnung der $\lambda$/4-Plättchen zur Polarisationsrichtung des Laserstrahles festgelegt.

Der Erfindung liegt die Aufgabe zugrunde, eine polarisationsoptische Anordnung in einer interferometrischen Meßeinrichtung zu schaffen, mit der durch Aufspaltung an einem Gitter interferierende Teilstrahlenbündel möglichst gleicher Modulation und Intensität erzeugt werden.

Diese Aufgabe wird durch eine Anordnung mit den Merkmalen des Anspruches 1 gelöst.

Die Vorteile der erfindungsgemäßen Anordnung liegen in der einfachen Auswertung der gleichartigen Signale und darin, daß bei der Erzeugung von beispielsweise drei um 120° zueinander phasenverschobenen Signalen ein sogenanntes Drehfeld entsteht. Ein derartiges Drehfeld kann durch vektorielle Addition und Subtraktion so ausgewertet werden, daß symmetrische Signale ohne Gleichstromanteil erzeugt werden. Mit Hilfe von Prinzipdarstellungen und Ausführungsbeispielen soll die Erfindung nachstehend näher erläutert werden.

Es zeigt:

| | |
|---|---|
| Figur 1 | ein Prinzipschaubild einer Strahlenbündelaufspaltung mittels Gitter; |
| Figur 2 | eine Variante mit Gitterkaskade; |
| Figur 3 | eine Gittervariante; |
| Figur 4 | eine interferometrische Meßeinrichtung; |
| Figur 5 | eine Variante einer interferometrischen Meßeinrichtung; |
| Figur 6 | eine weitere Variante einer interferometrischen Meßeinrichtung; |
| Figur 7 | eine Längenmeßeinrichtung mit einer polarisationsoptischen Anordnung und |
| Figur 8 | einen Abstandssensor mit einer polarisationsoptischen Anordnung. |

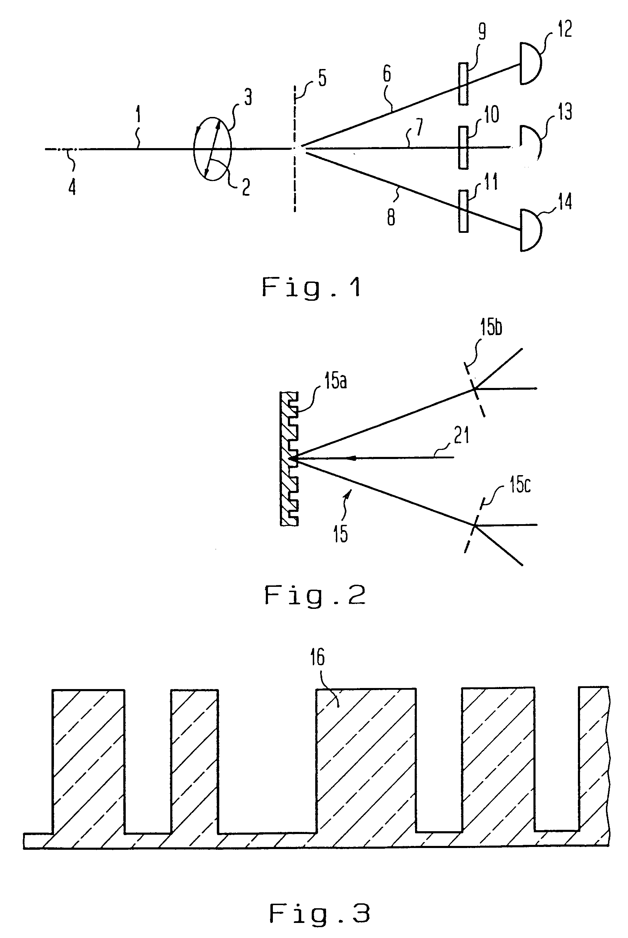

Das in Figur 1 dargestellte Prinzipschaubild zeigt ein Signalstrahlenbündel 1, welches von einer später noch beschriebenen interferometrischen Meßeinrichtung geliefert wird. Dieses Signalstrahlenbündel 1 ist linear polarisiert, was durch interferierende Teilstrahlenbündel in der interferometrischen Meßeinrichtung bedingt ist.

Eine Besonderheit dieses linear polarisierten Signalstrahlenbündels 1 ist die Rotation seiner Schwingungsebene. Das heißt, daß das Signalstrahlenbündel 1 eine linear polarisierte Welle darstellt, deren Schwingungsazimut von der gegenseitigen Phasenlage der zuvor interferierenden Teilstrahlenbündel abhängt. Dieser Sachverhalt ist durch einen Pfeil 2 verdeutlicht, der in einem perspektivisch symbolisierten Kreis 3 dargestellt ist. An einem Aufspaltgitter 5 entstehen drei Strahlenbündel 6, 7, 8 gleicher Intensität.

In den Strahlengängen der jeweiligen Strahlenbündel 6, 7, 8 sind Analysatoren 9, 10, 11 angeordnet. Die Analysatoren 9, 10, 11 sind zueinander um 60° verdreht angeordnet. Bei einer Rotation der Schwingungsebene 2 um 360° ergeben sich im elektrischen Signal zwei Schwingungsperioden, so daß bei drei zueinander geometrisch um 60° orientierten Analysatoren 9, 10, 11 drei elektrisch um 120° zueinander versetzte Signale von photoelektrischen Wandlern 12, 13, 14 detektiert werden können.

In Figur 2 ist schematisch dargestellt, daß das Aufspaltgitter auch durch eine Gitterkaskade 15, das heißt, durch hintereinandergeschaltete Gitter 15a, 15b, 15c gebildet sein kann, wobei das Gitter 15a als Laminargitter ausgebildet ist.

Das Aufspaltgitter kann auch als sogenanntes "Dammann"-Gitter 16 ausgebildet sein, wie in Figur 3 dargestellt ist. Derartige Gitter sind besonders geeignet, die Intensität der Teilstrahlenbündel gezielt zu beeinflussen.

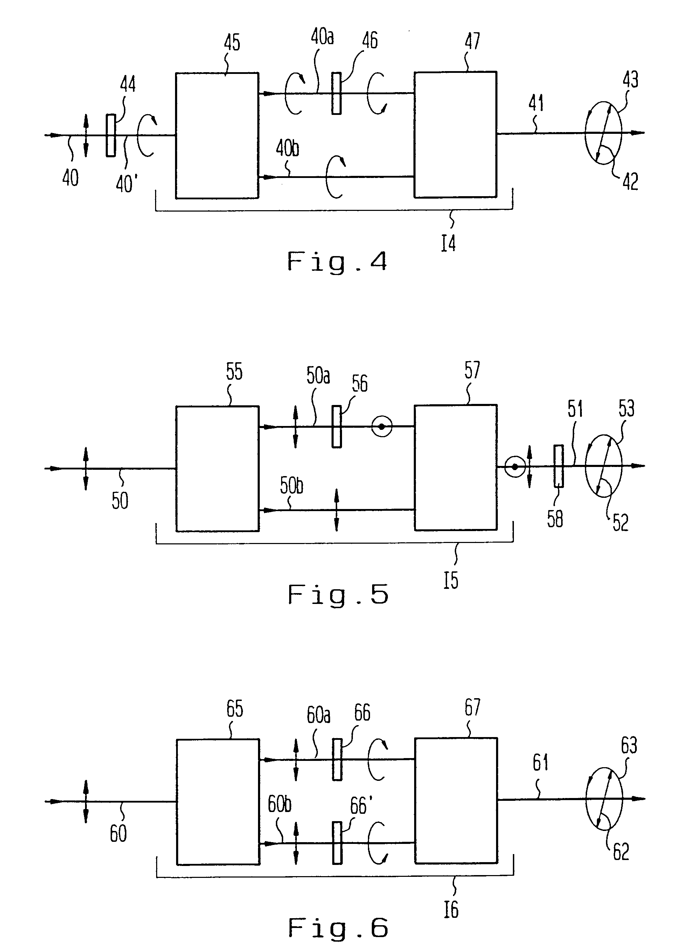

Die Figuren 4, 5 und 6 zeigen Anordnungen, mit denen durch interferometrische Meßeinrichtungen rotierende Signalstrahlenbündel erzeugt werden.

Bei dem Beispiel aus Figur 4 durchläuft ein linearpolarisiertes Strahlenbündel 40 eine Viertelwellenlängenplatte 44 - auch $\frac{\lambda}{4}$ -Plättchen genannt, welches um 45° zu dem linear polarisierten Strahlenbündel 40 orientiert ist. Das anschließend zirkular polarisierte Strahlenbündel 40' durchtritt einen Strahlteiler 45 mit dem zwei Teilstrahlenbündel 40a und 40b erzeugt werden. Durch eine Halbwellenlängenplatte 46 - auch $\frac{\lambda}{2}$ -Plättchen genannt - wird das zirkular polarisierte Teilstrahlenbündel 40a gegenüber dem ebenfalls zirkularpolarisierten Teilstrahlenbündel 40b gegenläufig zirkularpolarisiert und mit diesem an einem Strahlvereiniger 47 zur Interferenz gebracht. Eine relative Phasenänderung der Teilstrahlen entsteht z.B. durch eine unterschiedliche Beeinflussung der optischen Weglängen, oder durch Verschiebung von Phasengittern als Strahlteiler 45 oder Strahlvereiniger 47. Die Baugruppe aus Strahlteiler 45, $\frac{\lambda}{2}$ -Plättchen 46 und Strahlvereiniger 47 stellt ein herkömmliches Interferometer I4 dar, welches auch als an sich bekanntes Element den Figuren 5 und 6 zugrunde liegt. Da diese interferometrisch arbeitenden Baugruppen I4 bzw. I5 und I6 nur zur Erzeugung des resultierenden Strahlenbündels 41 bzw. 51 und 61 dienen, werden sie auch nur prinzipiell beschrieben.

Im Beispiel von Figur 5 ist ebenfalls ein Interferometer I5 dargestellt. Die Strahlenteilung erfolgt bei diesem Interferometer I5 in einem Strahlteiler 55, die Interferenz in einem Strahlvereiniger 57. Eine Halbwellenlangenplatte - $\frac{\lambda}{2}$ -Plättchen 56 ist im Strahlengang 50a des Interferometers I5 eingefügt. Die durch das λ/2-Plättchen 56 senkrecht zueinander polarisierten Teilstrahlenbündel 50a und 50b durchlaufen nach ihrer Interferenz ein λ/4-Plättchen 58. Daraus resultiert ein linear polarisiertes Signalstrahlenbündel 51, dessen Schwingungsazimut (Pfeil 52) von der gegenseitigen Phasenlage der Teilstrahlenbündel 50a und 50b abhängt.

Ein weiteres Beispiel ist in Figur 6 symbolisch dargestellt. Im wesentlichen entsprechen die Voraussetzungen denen in Figur 4 und 5 - gleichen Merkmalen sind gleiche Bezugsziffern zugeordnet, denen jedoch die Figurenbezifferung als Index vorangestellt ist.

Ein linear polarisiertes Strahlenbündel 60 wird in einem Strahlteiler 65 aufgeteilt. Beide Teilstrahlenbündel 60a und 60b durchlaufen λ/4-Plättchen 66 und 66', die unter +45° (66) und -45° (66') zur Polarisationsrichtung der Teilstrahlenbündel 60a und 60b stehen. Die anschließend rechts- und links zirkular polarisierten Teilstrahlenbündel vereinigen sich im Strahlvereiniger 67 und bilden am Ausgang ein linear polarisiertes Signalstrahlenbündel 61, dessen Schwingungsazimut (Pfeil 62) von der relativen Phasenlage der beiden Teilstrahlenbündel 60a und 60b abhängig ist. Auch hier wird ein Interferometer gebildet, das mit I6 bezeichnet ist.

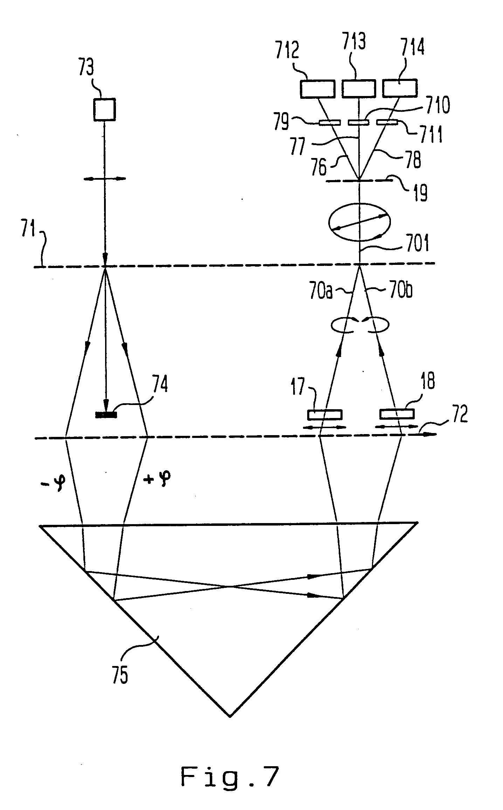

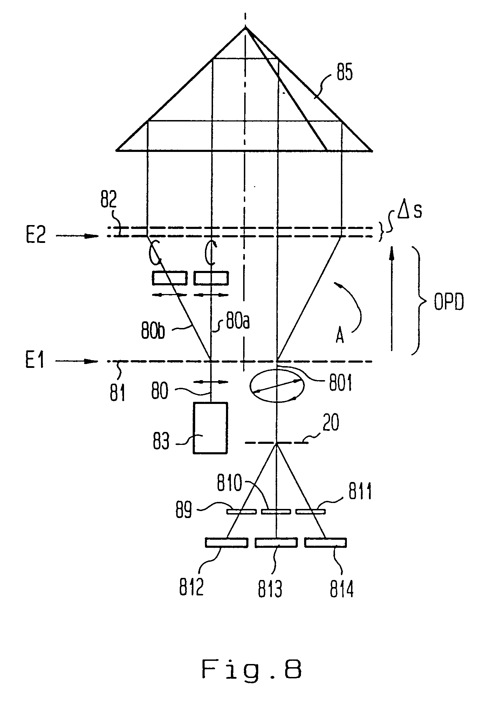

In den Figuren 7 und 8 sind Anwendungsbeispiele gezeigt, bei denen die erfindungsgemäße polarisationsoptische Anordnung in besonders vorteilhafter Weise eingesetzt werden kann.

Figur 7 zeigt ein Wegmeßsystem, dessen Arbeitsweise nachstehend kurz erläutert wird:

An einem nicht dargestellten, relativ zu einem anderen Objekt beweglichen Objekt ist ein Beugungsgitter in Form eines Phasengitters 72 befestigt. Das Objekt bewegt sich mit dem Phasengitter 72 parallel zu einem ebenfalls nicht dargestellten zweiten Objekt. An diesem zweiten Objekt ist ebenfalls ein Beugungsgitter 71 befestigt.

Von einer Beleuchtungseinrichtung - vorzugsweise einem Laser 73 - wird Licht ausgesendet und am Phasengitter 71 gebeugt. Gebeugte Teilstrahlenbundel -φ und +φ treffen auf das zweite Beugungsgitter 72 und werden abermals gebeugt. Die 0. Beugungsordnung wird mittels einer Blende 74 ausgeblendet, bevor dieses Teilstrahlenbündel auf das zweite Beugungsgitter 72 auftrifft.

Dem zweiten Beugungsgitter 72 ist ein sogenanntes retroreflektierendes Element nachgeordnet. Solche Elemente sind an sich bekannt und für dieses Ausführungsbeispiel ist ein Tripelspiegel 75 gewählt worden. Das Beugungsgitter 72 und der Tripelspiegel 75 sind so aufeinander abgestimmt, daß sich die Teilstrahlenbündel -φ und +φ in einem einzigen Punkt schneiden. Nach dem Austritt aus dem Tripelspiegel 75 werden die Teilstrahlenbündel -φ und +φ beim Durchtritt durch das Beugungsgitter 72 wieder gebeugt und treffen auf das Phasengitter 71, wo sie nochmals gebeugt werden. In den Strahlengängen befinden sich λ/4-Plättchen 17 und 18, die um +45° und -45° zur Schwingungsebene orientiert sind. Beim Durchtreten dieser λ/4-Plättchen werden die Teilstrahlenbündel 70a und 70b gegenläufig zirkular polarisiert und erzeugen bei ihrer Interferenz am Gitter 71 ein schon beschriebenes Signalstrahlenbündel 701, dessen Schwingungsazimut von der relativen Phasenlage der beiden Teilstrahlenbündel 70a und 70b abhängt.

Dieses Signalstrahlenbündel 701 wird am Aufspaltgitter 19 in drei Teilstrahlenbündel 76, 77, 78 aufgespalten, durchlaufen je einen Analysator 79, 710, 711 die um 60° zueinander orientiert sind und werden auf fotoelektrische Wandler 712, 713, 714 gelenkt.

Ein weiteres Ausführungsbeispiel ist bei einem Abstandssensor gemäß Figur 8 dargestellt. Im wesentlichen sind die der Erfindung zuzuordnenden Bedingungen die gleichen, wie schon beschrieben, jedoch soll der Anwendungsfall nochmals erläutert werden.

Ein in der Figur 8 dargestellter Abstandssensor A weist als Beleuchtungseinrichtung einen Laser 83 auf, der einen linearpolarisierten Beleuchtungsstrahl 80 auf ein Beugungsgitter 81 wirft, das sich in einer Ebene E1 befindet. Von dem Beugungsgitter 81 wird der Beleuchtungsstrahl 80 in zwei Teilstrahlenbündel 80a und 80b aufgespalten, die in unterschiedliche Richtungen laufen. Hier soll angemerkt werden, daß selbstverständlich auch andere optische Elemente zur Aufspaltung des Beleuchtungsstrahles 80 verwendet werden können. Parallel zur Ebene E1 des Aufspaltungsortes, in der sich das Beugungsgitter 81 befindet, liegt in einer Ebene E2 ein weiteres Beugungsgitter 82, an dem die Teilstrahlenbündel 80a und 80b nochmals gebeugt werden. Nach der Umlenkung am Beugungsgitter 82 verlaufen die Teilstrahlenbündel 80a und 80b parallel zueinander, treten in ein Tripelprisma 85 ein, durchlaufen es und treffen als immer noch parallele Teilstrahlenbündel wieder auf das Beugungsgitter 82 in der Ebene E2. Hier werden sie derart gebeugt, daß sie am Beugungsgitter 81 in der Ebene E1 zur Interferenz kommen. Die Teilstrahlenbündel 80a und 80b durchlaufen von der Aufspaltung bis zur Vereinigung unterschiedlich lange optische Wege. Dies nennt man den Gangunterschied OPD, als Kürzel für den international gebräuchlichen Begriff "OPTICAL PATH DIFFERENCE".

Wenn sich der Abstand der Beugungsgitter 81 und 82 in den Ebenen E1 und E2 ändert, ändert sich auch der Gangunterschied OPD der Teilstrahlenbündel 80a und 80b. Das heißt, wenn sich die Ebenen E1 und E2 einander nähern, wird der Gangunterschied OPD kleiner, wenn sich der Ebenen-Abstand vergrößert, wird auch der Gangunterschied OPD größer.

Eine Relativbewegung in Normalenrichtung der beiden Beugungsgitter 81 und 82 hat eine direkt zu deren Abstandsänderung $\Delta s$ proportionale Gangunterschiedsdifferenz $\Delta OPD$ der interferierenden Teilstrahlenbündel 80a und 80b zur Folge, was als Hell- Dunkelmodulation von einer Detektoreinrichtung detektiert werden kann. Eine polarisationsoptische Anordnung liegt räumlich hinter dem Laser 83 und wird nachstehend unter Bezug auf die vorangegangenen Figurenbeschreibungen nur noch kurz erläutert.

Aus den gegenläufig zirkular polarisierten Teilstrahlenbündeln 80a und 80b wird nach der Vereinigung am Gitter 81 ein linear polarisiertes Signalstrahlenbündel 801 erzeugt, welches wie vorbeschrieben an einem Aufspaltgitter 20 gebeugt und Analysatoren 89, 810, 811 so wie nachgeordneten Detektoren 812, 813, 814 zugeführt wird. Die Voraussetzungen für diese Analyse ist im Prinzip zur Figur 1 beschrieben worden.

Die Erläuterungen zu den Ausführungsbeispielen begrenzen die Anwendung der erfindungsgemäßen polarisationsoptischen Anordnungen keineswegs auf Längenmeßeinrichtungen, andere Anwendungen, vor allem bei der Winkelmessung sind eingeschlossen.

## Patentansprüche

1. Polarisationsoptische Anordnung zur Erzeugung phasenverschobener Signale in interferometrischen Meßeinrichtungen (I4, I5, I6, A), bei der mehrere Teilstrahlenbündel (40a, 40b; 50a, 50b; 60a, 60b; 70a, 70b; 80a, 80b) überlagert und so polarisiert sind, daß ein analysierbares Signalstrahlenbündel (1, 41, 51, 61, 701, 801) erzeugt wird, und bei der wenigstens ein Gitter als Aufspaltgitter (5, 19, 20) für das Signalstrahlenbündel (1, 41, 51, 61, 701, 801) vorhanden ist, und bei der das Signalstrahlenbündel (1, 41, 51, 61, 701, 801) linear polarisiert ist und dessen Schwingungsazimut von der gegenseitigen Phasenlage der interferierenden Teilstrahlenbündel (40a, 40b; 50a, 50; 60a, 60b; 70a, 70b; 80a, 80b) abhängt, ferner die am Aufspaltgitter (5, 19, 20) erzeugten i (i = 2...n) Strahlenbündel von i (i = 2...n) photoelektrischen Wandlern (12, 13, 14; 712, 713, 714; 812, 813, 814) detektiert werden, und die gegenseitige Phasenlage der so erzeugten i (i = 2...n) Detektorsignale von der gegenseitigen Orientierung von i (i = 2...n) Analysatoren (9, 10, 11; 79, 710, 711; 89, 810, 811) in den jeweiligen Strahlengängen (6, 7, 8; 76, 77, 78; 86, 87, 88) abhängig ist.

2. Polarisationsoptische Anordnung nach Anspruch 1, dadurch gekennzeichnet, daß die Analysatoren (9, 10, 11; 79, 710, 711; 89, 810, 811) unter einem Winkel von 1/i 180° (i = 2...n) zueinander orientiert sind.

3. Polarisationsoptische Anordnung nach Anspruch 1, dadurch gekennzeichnet, daß das Aufspaltgitter (5, 19, 20) als Transmissions- oder Reflexionsgitter ausgebildet ist.

4. Polarisationsoptische Anordnung nach Anspruch 1, dadurch gekennzeichnet, daß als Aufspaltgitter eine Gitterkaskade (15) vorhanden ist.

5. Polarisationsoptische Anordnung nach Anspruch 1, dadurch gekennzeichnet, daß als Aufspaltgitter ein sogenanntes Dammann-Gitter (16) vorhanden ist.

6. Polarisationsoptische Anordnung nach Anspruch 3, dadurch gekennzeichnet, daß als Aufspaltgitter ein Laminar-Gitter (15a)-vorhanden ist.

7. Polarisationsoptische Anordnung nach Anspruch 3, dadurch gekennzeichnet, daß als Transmissionsgitter ein Phasengitter vorhanden ist.

## Claims

1. Optical system utilising polarization in order to generate dephased signals in interferometric measuring devices (14, 15, 16, A), in which a plurality of partial beam clusters (40a, 40b; 50a, 50b; 60a, 60b; 70a, 70b; 80a, 80b) are superimposed and are polarised so that an analysable signal beam cluster (1, 41, 51, 61, 701, 801) is generated, and in which at least one grid is present as a splitting grid (5, 19, 20) for the signal beam cluster (1, 41, 51, 61, 701, 801) , and in which the signal beam cluster (1, 41, 51, 61, 701, 801) is polarised in a linear fashion, and its oscillatory azimuth is dependent on the mutual phase position of the interfering partial beam clusters (40a, 40b; 50a, 50b; 60a, 60b; 70a, 70b; 80a, 80b), further the beam clusters generated at the splitting grid (5, 19, 20) are detected by i (i = 2...n) photoelectric detectors (12, 13, 14; 712, 713, 714; 812, 813, 814), and the mutual phase position of the detector signals thus generated is dependent on the mutual orientation of i (i = 2...n) analyzers (9, 10, 11; 79, 710, 711; 89, 810, 811) in the respective beam paths (6, 7, 8; 76, 77, 78; 86, 87, 88).

2. Optical system utilizing polarisation according to claim 1, characterized in that the analysers (9, 10, 11; 79, 710, 711; 89, 810, 811) are oriented to one another at an angle of 1/i 180° (i = 2...n).

3. Optical system utilizing polarization according to claim 1, characterized in that the splitting grid (5, 19, 20) is formed as a transmission or reflection grid.

4. Optical system utilizing polarization according to claim 1, characterized in that a grid cascade (15) is present as a splitting grid.

5. Optical system utilizing polarization according to claim 1, characterized in that a so-called Dammann grid (16) is present as a splitting grid.

6. Optical system utilizing polarization according to claim 3, characterized in that a laminar grid (15a) is present as a splitting grid.

7. Optical system utilizing polarization according to claim 3, characterized in that a phase grid is present as a transmission grid.

## Revendications

1. Agencement optique à polarisation pour la production de signaux déphasés dans des dispositifs de mesure (14, 15, 16, A) interférométriques, dans lequel plusieurs faisceaux partiels de rayons (40a, 40b; 50a, 50b; 60a, 60b; 70a, 70b; 80a, 80b) sont superposés et polarisés de manière que soit produit un faisceau de rayons de signaux (1, 41, 51, 61, 701, 801) analysable, et dans lequel au moins un réseau est prévu en tant que réseau de division (5, 19, 20) pour le faisceau de rayons de signaux (1, 41, 51, 61, 701, 801), et dans lequel le faisceau de rayons de signaux (1, 41, 51, 61, 701, 801) est polarisé linéairement et son azimut de vibration dépend de la position de phase réciproque des faisceaux partiels de rayons (40a, 40b; 50a, 50b; 60a, 60b; 70a, 70b; 80a, 80b) entrant en interférence, les i (i = 2..n) faisceaux de rayons produits sur le réseau de division (5, 19, 20) étant détectés par i (i = 2...n) convertisseurs photoélectriques (12, 13, 14; 712, 713, 714; 812, 813, 814), et la position de phase réciproque des i (i = 2...n) signaux de détecteur ainsi produits dépendant de l'orientation réciproque de i (i = 2...n) analyseurs (9, 10, 11; 79, 710, 711; 89, 810, 811) dans les trajets de rayons respectifs (6, 7, 8; 76, 77, 78; 86, 87, 88).

2. Agencement optique à polarisation suivant la revendication 1, caractérisé par le fait que les analyseurs (9, 10, 11; 79, 710, 711; 89, 810, 811) sont orientés les uns par rapport aux autres sous un angle de 1/i 180° (i = 2...n).

3. Agencement optique à polarisation suivant la revendication 1, caractérisé par le fait que le réseau de division (5, 19, 20) est réalisé sous forme de réseau par transmission ou par réflexion.

4. Dispositif optique à polarisation suivant la revendication 1, caractérisé par le fait que le réseau de division est constitué par une cascade de réseaux (15).

5. Agencement optique à polarisation suivant la revendication 1, caractérisé par le fait que le réseau de division est constitué par un réseau dit de Dammann (16).

6. Agencement optique à polarisation suivant la revendication 3, caractérisé par le fait que le réseau de division est constitué par un réseau laminaire (15a).

7. Agencement optique à polarisation suivant la revendication 3, caractérisé par le fait que le réseau de transmission est un réseau de phase.

Fig.1

Fig.2

Fig.3

Fig.4

Fig.5

Fig.6

Fig.7

Fig.8